# EUROPEAN PATENT SPECIFICATION

(11) **EP 3 233 426 B1**
(45) Date of publication and mention of the grant of the patent: **30.12.2020**
(21) Application number: 15717874.0
(22) Date of filing: 17.04.2015
(51) Int. Cl.: B29C 64/165, B29C 64/393

(54) **DETECTION OF AN ANOMALY IN A THREE-DIMENSIONAL PRINTER**
ERKENNUNG VON ANOMALIEN BEI EINEM DREIDIMENSIONALEN DRUCKER
DÉTECTION D'UNE ANOMALIE DANS UNE IMPRIMANTE 3D

(43) Date of publication of application: 25.10.2017
(73) Proprietor: Hewlett-Packard Development Company, L.P., Spring TX 77389 (US)
(72) Inventor: SANCHEZ, Salvador, E-08174 Sant Cugat del Valles (ES); CULUBRET, Sergi, E-08174 Sant Cugat del Valles (ES); SANZ ANANOS, Isabel, E-08174 Sant Cugat del Valles (ES); SANZ ANANOS, Santiago, E-08174 Sant Cugat del Valles (ES)
(74) Representative: Haseltine Lake Kempner LLP
(86) International application number: PCT/EP2015/058455
(87) International publication number: WO 2016/165785

(56) References cited:
- WO-A1-00/52624
- US-A1- 2004 173 946

## Description

### BACKGROUND

Some three-dimensional printers may use various chemical agents on a layer of build material (in powder) before curing this layer of build material. Some printers use two types of chemical agent, a first type known as coalescing agent enhances the absorption of energy that leads to coalescence of the layer of build material, a second type known as coalescence modifier agent (or moderating agent) suppresses the effects of thermal conduction around the areas covered with the coalescing agent. Three-dimensional printers using these two agents are often called multiple agent additive manufacturing system.

Chemical agents may be deposited using print-heads, such as thermal or piezoelectric inkjet print-heads.

WO00/52624 discloses a method for three-dimensional printing in layers having controllable depth. US2004/173946 discloses a process for production of three-dimensional bodies which evaluates layer buildup using an optical device.

### BRIEF DESCRIPTION OF THE DRAWINGS

The following detailed description references the drawings, wherein:
FIG. 1 is a block diagram of a method according to an example.
FIG. 2 is a schematic representation of a three-dimensional printer according to an example.
FIG. 3A and 3B are schematic representations of printed patterns according to an example.
FIG. 4A and 4B are schematic representations of printed patterns according to an example.

### DETAILED DESCRIPTION

Present invention concerns a method of printing according to appended claim 1, a device for controlling according to appended claim 10 and a three-dimensional printer according to appended claim 11. Three-dimensional printers such as multiple agent additive manufacturing systems use additive manufacturing technologies, wherein parts are built by adding successive layers of build material from a series of cross sections that are joined together or fused to create the final shape of the part.

In some examples, a multiple agent additive manufacturing system may be used such as that described in PCT Application No. PCT/EP2014/050841 filed on January 16, 2014, entitled "GENERATING A THREE-DIMENSIONAL OBJECT".

Printers such as multiple agent additive manufacturing systems use sintering: the particles of a layer of powdered build material are heated until coalescence occurs and the particles are joined. In printers such as multiple agent additive manufacturing systems, a coalescing agent may be deposited on the areas where the particles are expected to form the part to be printed and a coalescence modifier agent may be deposited around these areas in order to improve the selectivity and the geometrical accuracy.

The chemical agents may be deposited using print-heads equipped with nozzles for depositing the agents. The print-heads scan the surface while the nozzles deposit the agents, either by moving the print-heads (scanning printer) or moving the layer of build material (with fixed print-heads).

A technical difficulty appears in the detection of detective nozzles.

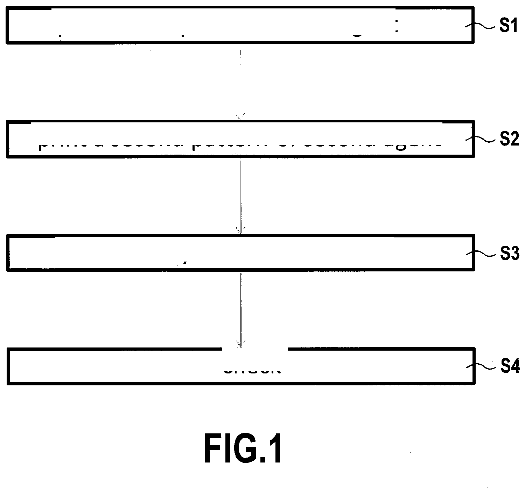

An example of a method for detecting an anomaly in a nozzle of a three-dimensional printer is shown schematically on FIG. 1. A first pattern is printed (S1) using a first agent, for example an agent that reacts with the curing such as a coalescing agent. This first agent is deposited on a layer of build material using at least one nozzle of the three-dimensional printer, or a portion of the nozzles, or all the nozzles that deposit a coalescing agent of the three-dimensional printer.

A second pattern is then printed (S2) using a second agent different from the first agent, for example a coalescence modifier agent (i.e. an agent that inhibits reaction with the curing).

If the first agent is a coalescing agent and the second agent is a coalescence modifier agent, this second pattern is also deposited on the layer of build material using at least one nozzle of the three-dimensional printer that deposit coalescence modifier agent and this nozzle is therefore different from a nozzle that deposit coalescing agent. Printing the second pattern may also use a portion of the nozzles that deposit a coalescence modifier agent or all the nozzles that deposit a coalescence modifier agent.

The second pattern is adjacent to the first pattern: there exists at least one junction between the first and the second pattern, the layer of build material therefore comprises at least one junction between an area having been printed with the coalescing agent and an area having been printed with the coalescence modifier agent.

It should be noted that the printing of the second pattern S2 may be carried out simultaneously with the printing of the first pattern S1. In an example, the printing of the first pattern S1 and the printing of the second pattern S2 are carried out in a same printing process wherein print-heads equipped with nozzles scan the layer of build material.

The layer of build material is then cured (S3), for example using an infrared light source. The inventors have observed that the areas covered with an agent that reacts with the curing, for example a coalescing agent, contract because of the curing that leads to coalescence and solidification than other areas covered with an agent that inhibits reacting with the curing, for example a coalescence modifier agent. This contraction may lead to a loss of height of about 50 microns with respect to the areas covered with the agent that inhibits reaction, for example a coalescence modifier agent. In this example, the coalescence modifier agent improves the contrast as concerns height: a sharper difference of height appears between the patterns.

The layer of build material is then scanned to check (S4) the presence of a difference in height between the first pattern and the second pattern. Because of the contraction of the areas covered with the first agent after coalescence and solidification, this difference of height may be detected with a sensor, for example an optical sensor.

If the difference of height is detected, it can be deduced that there is no anomaly of the nozzles used for printing the patterns along the junction.

If no difference of height is detected, it is possible to report an anomaly relating to a nozzle being defective. The reporting of the anomaly may be realized by prompting a user through a graphical user interface that a nozzle is defective. Servicing operations may be carried out on the print-head, for example spitting, wiping, purging. The print-head carrying a defective nozzle may also be replaced.

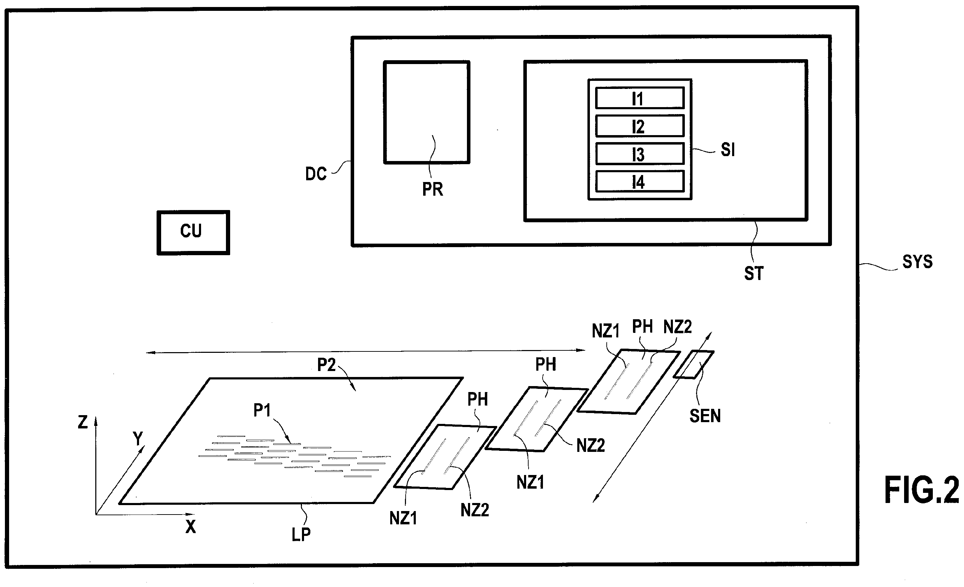

A three-dimensional printer SYS is shown on FIG. 2. More precisely, the three-dimensional printer SYS may be a three-dimensional printer such as a multiple agent additive manufacturing system adapted for forming three-dimensional objects from a bed of powder. The printer SYS comprises a layer of build material LP comprising a material suitable for coalescing after having been printed with a coalescing agent and a coalescence modifier agent and after having been cured.

In order to deposit the coalescing agent and the coalescence modifier agent, the printer SYS is equipped with print-heads PH, each comprising a plurality of first nozzles NZ1 for depositing a coalescing agent and a plurality of second nozzles NZ2 for depositing a coalescence modifier agent. On each print-head PH, the first nozzles NZ1 are aligned in an array along the Y direction represented on FIG. 2. During printing, the print-heads PH move along the X direction represented on FIG. 2.

The system SYS is also equipped with a height sensor SEN, which is configured to move along the Y direction and along the X direction. The sensor SEN is able to sense differences of heights in the Z direction, for example of the order of about 50 microns.

In an example, the height sensor SEN has the structure of a CD/DVD pickup reader. Other sensors may also be used, for example a sensor configured for obtaining a profile of the layer of build material, or a sensor configured for sensor alignment.

On FIG. 2, a first pattern of lines P1 has been represented as having been printed by the first nozzles NZ1 on the layer of build material LP. This first pattern P1 comprises a plurality of stair-step patterns. In each stair-step pattern, each line is associated with a first nozzle NZ1. The use of a stair-step pattern with each step being associated with a different nozzle allows to form lines in the X axis that are independent from each other, and it allows better detection of an anomaly in a nozzle.

The layer of build material LP has also received a second pattern P2 printed with the second nozzles NZ2 and corresponding to the area of the layer of build material LP not covered by the lines of the first pattern P1. The second pattern P2 therefore surrounds all the stair-step lines of the pattern P1.

It should be noted that the pattern P1 (and the pattern P2) may be used to detect anomalies in the first nozzles NZ1. Other patterns more appropriate for detecting anomalies in the second nozzles depositing inhibiting materials will also be described hereinafter.

Additionally, and in order to improve the detection of anomalies in nozzles, positional (or fiducial) patterns may be printed (using the first and/or second nozzles) in order to facilitate the localization of the nozzles. By way of example, these blocks may help locate a nozzle positioned at one end of a print-head (i.e. the first nozzle starting from the side of the print-head).

An example of check block may be a rectangular shape. Other shapes may also be implemented.

It should also be noted that the positional patterns may be printed before the first pattern and the second pattern. In other words, the positional patterns may be printed on the right of the layer of build material of FIG. 2, the print-heads moving towards the left side of the layer of build material in order to print the first and second patterns. This example allows scanning the positional patterns before scanning the first and second pattern.

The first pattern P1 and the second pattern P2 printed on the layer of build material LP may be cured using a curing unit CU, for example an infrared light, microwave sources, or other electromagnetic radiation sources.

The three-dimensional printer SYS also comprises a device for controlling a three-dimensional printer DC including a processor PR and a storage ST cooperating with the processor.

The storage ST comprises a set of instructions SI executable by the processor PR. The set of instructions SI comprises an instruction I1 to print a first pattern such as the first pattern P1 on the layer of build material LP. The instruction I1, when executed, commands the print-heads PH so that the first nozzles NZ1 print the pattern. The set of instructions SI also comprises an instruction 12 to print a second pattern such as the second pattern P2. The instruction 12, when executed, commands the print-heads PH so that the second nozzles NZ2 print the pattern. The set of instructions SI further comprises instructions 13 and 14 to cure the layer of build material using the curing unit CU and to sense a difference of height at the junction between the first pattern and the second pattern using the sensor SEN.

The set of instructions SI may additionally comprise instructions to report an anomaly if an expected difference of height is undetected.

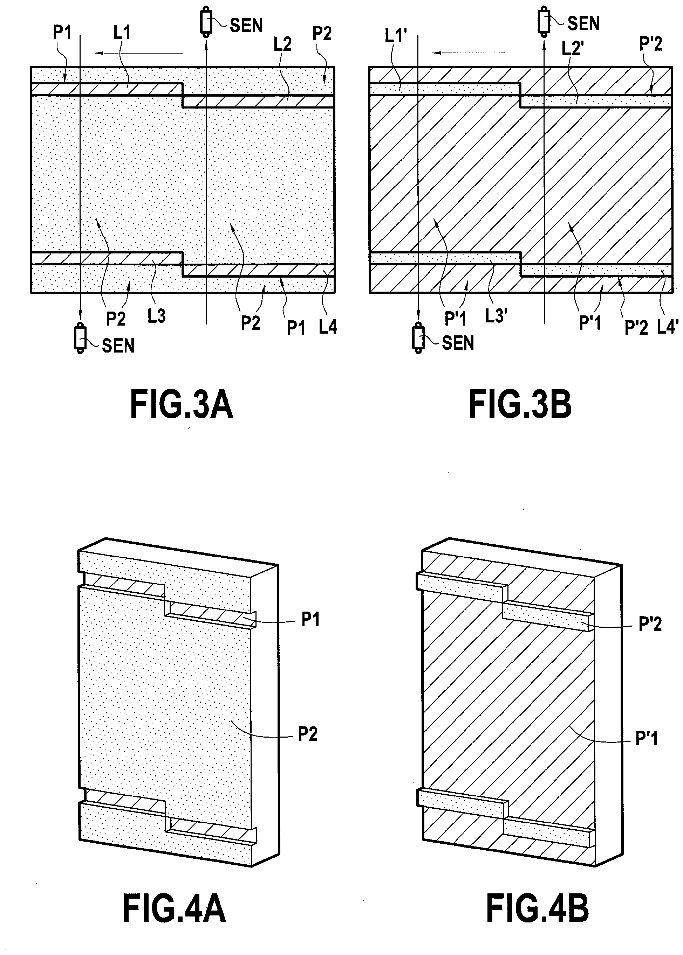

FIG. 3A is a top view of a layer of build material in which patterns have been printed. More specifically, the patterns printed on the layer of build material of FIG. 3A are adapted for the detection of anomalies in nozzles used for depositing a coalescing agent and the patterns are thus analogous to the patterns of FIG. 2.

On FIG. 3A, the first pattern P1 comprises a plurality of stair-step patterns made from lines L1, L2, L3 and L4. In each stair-step pattern, each line is associated with a first nozzle depositing a coalescing agent. By way of example, lines L1 and L2 are each associated with two nozzles that are adjacent on a same print-head, and lines L3 and L4 are each associated with two other nozzles that are adjacent on a same print-head. The second pattern P2 corresponds to the area of the layer of build material not covered by the lines of the first pattern P1.

The movements of a height sensor SEN have been represented on this figure by arrows. The sensor SEN moves perpendicularly with respect to the general directions of the lines of the first pattern P1 in order to detect a difference of height, and the sensor SEN moves in the same direction as the lines in order to move to another set of lines that correspond to a different set of nozzles.

FIG. 3B is a also top view of a layer of build material in which patterns have been printed. More specifically, the patterns printed on the layer of build material of FIG. 3B are adapted for the detection of anomalies in nozzles used for depositing a coalescence modifier agent. The patterns of FIG. 3B are thus the negative equivalent of the patterns described in reference to FIG. 3A.

On FIG. 3B, the second pattern P'2 comprises a plurality of stair-step patterns made from lines L1', L2', L3' and L4'. In each stair-step pattern, each line is associated with a first nozzle depositing a coalescence modifier agent. By way of example, lines L1' and L2' are each associated with two nozzles that are adjacent on a same print-head, and lines L3' and L4' are each associated with two other nozzles that are adjacent on a same print-head. The first pattern P'1 corresponds to the area of the layer of build material not covered by the lines of the second pattern P'2.

The movements of a height sensor SEN have been represented on this figure by arrows. The sensor SEN moves perpendicularly with respect to the general directions of the lines of the second pattern P'2.

FIG. 4A is a three-dimensional representation of the layer of build material of FIG. 3A obtained after curing. The contraction of the powder covered with coalescing agent creates trenches for each line of the pattern P1.

FIG. 4B is a three-dimensional representation of the layer of build material of FIG. 3B obtained after curing. The contraction of the powder covered with coalescing agent creates protruding strips for each line of the pattern P2.

According to an example, there is provided a simple method to automatically detect anomalies in a nozzle used in a three-dimensional printer. The method according to this example may be performed automatically without a user commanding the three-dimensional printer. Additionally, this method may be realized on a single layer of build material, and the checking and scanning may be realized directly after curing the layer of build material in which the patterns have been printed: it is the contraction of the powder that is measured, without printing features using several layers of powder to detect an anomaly.

## Claims

1. A method comprising:
- printing a first pattern using at least one first nozzle for depositing a coalescing agent to a layer of build material,
- printing a second pattern adjacent to the first pattern using at least one second nozzle for depositing a coalescence modifier agent,
- curing the layer of build material,
- checking the presence of a difference in height at an edge between the first pattern and the second pattern, and detecting an anomaly if said difference is not present.

2. A method in accordance with the method of claim 1, comprising reporting said anomaly if the difference in height is not present.

3. A method in accordance with the method of claim 1, wherein the first pattern is printed using a group of first nozzles for depositing the coalescing agent, the first pattern comprising a plurality of lines each associated with a first nozzle and forming a stair-step pattern.

4. A method in accordance with the method of claim 3, wherein the first pattern comprises a plurality of parallel stair-step patterns.

5. A method in accordance with the method of claim 1, wherein the second pattern is printed using a group of second nozzles for depositing the coalescence modifier agent, the second pattern comprising a plurality of lines each associated with a second nozzle and forming a stair-step pattern.

6. A method in accordance with the method of claim 5, wherein the second pattern comprises a plurality of parallel stair-step patterns.

7. A method in accordance with the method of claim 1, comprising printing a positioning pattern.

8. A method in accordance with the method of claim 1, wherein checking the presence of a difference in height comprises moving a sensor in a direction perpendicular to the overall direction of the first pattern.

9. A method in accordance with the method of claim 1, wherein checking the presence of a difference in height includes using an optical sensor scanning the layer of build material.

10. A device for controlling a three-dimensional printer comprising a processor and a storage comprising executable instructions to:
- print a first pattern using a first nozzle arranged in the three-dimensional printer, the first nozzle depositing a coalescing agent on a layer of build material,
- print a second pattern using a second nozzle arranged in the three-dimensional printer, the second nozzle depositing a coalescence modifier agent on a layer of build material,
- command a curing unit of the three-dimensional printer to cure the layer of build material,
- command a sensor to check the presence of a difference in height between the first and second pattern and detect an anomaly if said difference is not present.

11. A three-dimensional printer comprising
a processor,
a storage,
the storage comprising executable instructions to:
print a first pattern of coalescing agent on a layer of build material in the three-dimensional printer using a nozzle arranged in the three-dimensional printer,
print a second pattern adjacent to the first pattern using at least one second nozzle for depositing a coalescence modifier agent,
cure the layer of build material,
sense a difference of height at the junction between the first pattern and the second pattern, and detect an anomaly if said difference is not present.

## Patentansprüche

1. Verfahren, das Folgendes umfasst:
- Drucken eines ersten Musters unter Verwendung wenigstens einer ersten Düse zum Abscheiden eines Koaleszenzmittels auf einer Schicht aus Baumaterial,
- Drucken eines zweiten Musters angrenzend an das erste Muster unter Verwendung wenigstens einer zweiten Düse zum Abscheiden eines Koaleszenzmodifizierungsmittels,
- Aushärten der Schicht aus Baumaterial,
- Überprüfen des Vorhandenseins eines Höhenunterschieds an einer Kante zwischen dem ersten Muster und dem zweiten Muster, und Detektieren einer Anomalie, falls dieser Unterschied nicht vorhanden ist.

2. Verfahren nach dem Verfahren in Anspruch 1, das ein Melden der Anomalie umfasst, falls der Höhenunterschied nicht vorhanden ist.

3. Verfahren nach dem Verfahren in Anspruch 1, wobei das erste Muster unter Verwendung einer Gruppe von ersten Düsen zum Abscheiden des Koaleszenzmittels gedruckt wird, wobei das erste Muster mehrere Linien umfasst, die jeweils einer ersten Düse zugeordnet sind und ein Treppenstufenmuster ausbilden.

4. Verfahren nach dem Verfahren in Anspruch 3, wobei das erste Muster mehrere parallele Treppenstufenmuster umfasst.

5. Verfahren nach dem Verfahren in Anspruch 1, wobei das zweite Muster unter Verwendung einer Gruppe von zweiten Düsen zum Abscheiden des Koaleszenzmodifizierungsmittels gedruckt wird, wobei das zweite Muster mehrere Linien umfasst, die jeweils einer zweiten Düse zugeordnet sind und ein Treppenstufenmuster ausbilden.

6. Verfahren nach dem Verfahren in Anspruch 5, wobei das zweite Muster mehrere parallele Treppenstufenmuster umfasst.

7. Verfahren nach dem Verfahren in Anspruch 1, das ein Drucken eines Positionierungsmusters umfasst.

8. Verfahren nach dem Verfahren in Anspruch 1, wobei ein Überprüfen des Vorhandenseins eines Höhenunterschieds ein Bewegen eines Sensors in einer zu der Gesamtrichtung des ersten Musters senkrechten Richtung umfasst.

9. Verfahren nach dem Verfahren in Anspruch 1, wobei das Überprüfen des Vorhandenseins eines Höhenunterschieds ein Verwenden eines optischen Sensors beinhaltet, der die Schicht aus Baumaterial abtastet.

10. Vorrichtung zum Steuern eines dreidimensionalen Druckers, der einen Prozessor und einen Speicher umfasst, der ausführbare Anweisungen für Folgendes umfasst:
- Drucken eines ersten Musters unter Verwendung einer ersten Düse, die in dem dreidimensionalen Drucker angeordnet ist, wobei die erste Düse ein Koaleszenzmittel auf einer Schicht aus Baumaterial abscheidet,
- Drucken eines zweiten Musters unter Verwendung einer zweiten Düse, die in dem dreidimensionalen Drucker angeordnet ist, wobei die zweite Düse ein Koaleszenzmodifizierungsmittel auf einer Schicht aus Baumaterial abscheidet;
- einer Härtungseinheit des dreidimensionalen Druckers zu befehlen, die Schicht aus Baumaterial zu härten,
- einem Sensor zu befehlen, das Vorhandensein eines Höhenunterschieds zwischen dem ersten und dem zweiten Muster zu überprüfen und eine Anomalie zu detektieren, falls dieser Unterschied nicht vorhanden ist.

11. Dreidimensionaler Drucker, der Folgendes umfasst:
einen Prozessor,
einen Speicher,
wobei der Speicher ausführbare Anweisungen für Folgendes umfasst:
Drucken eines ersten Musters eines Koaleszenzmittels auf eine Schicht aus Baumaterial in dem dreidimensionalen Drucker unter Verwendung einer Düse, die in dem dreidimensionalen Drucker angeordnet ist,
Drucken eines zweiten Musters angrenzend an das erste Muster unter Verwendung wenigstens einer zweiten Düse zum Abscheiden eines Koaleszenzmodifizierungsmittels,
Härten der Schicht aus Baumaterial,
Erfassen eines Höhenunterschieds an der Verbindungsstelle zwischen dem ersten Muster und dem zweiten Muster, und Detektieren einer Anomalie, falls dieser Unterschied nicht vorhanden ist.

## Revendications

1. Procédé comprenant :
- l'impression d'un premier motif à l'aide d'au moins une première buse pour déposer un agent coalescent sur une couche de matériau de construction,
- l'impression d'un second motif adjacent au premier motif à l'aide d'au moins une seconde buse pour déposer un agent modificateur de coalescence,
- le durcissement de la couche de matériau de construction,
- la vérification de la présence d'une différence de hauteur à un bord entre le premier motif et le second motif, et la détection d'une anomalie si ladite différence n'est pas présente.

2. Procédé selon le procédé de la revendication 1, comprenant la notification de ladite anomalie si la différence de hauteur n'est pas présente.

3. Procédé selon le procédé de la revendication 1, le premier motif étant imprimé à l'aide d'un groupe de premières buses pour déposer l'agent coalescent, le premier motif comprenant une pluralité de lignes associées chacune à une première buse et formant un motif en escalier.

4. Procédé selon le procédé de la revendication 3, le premier motif comprenant une pluralité de motifs parallèles en escalier.

5. Procédé selon le procédé de la revendication 1, le second motif étant imprimé à l'aide d'un groupe de secondes buses pour déposer l'agent modificateur de coalescence, le second motif comprenant une pluralité de lignes chacune associée à une seconde buse et formant un motif en escalier.

6. Procédé selon le procédé de la revendication 5, le second motif comprenant une pluralité de motifs parallèles en escalier.

7. Procédé selon le procédé de la revendication 1, comprenant l'impression d'un motif de positionnement.

8. Procédé selon le procédé de la revendication 1, la vérification de la présence d'une différence de hauteur comprenant le déplacement d'un capteur dans une direction perpendiculaire à la direction globale du premier motif.

9. Procédé selon le procédé de la revendication 1, la vérification de la présence d'une différence de hauteur comportant l'utilisation d'un capteur optique balayant la couche de matériau de construction.

10. Dispositif de commande d'une imprimante tridimensionnelle comprenant un processeur et un dispositif de stockage comprenant des instructions exécutables pour :
- imprimer un premier motif à l'aide d'une première buse disposée dans l'imprimante tridimensionnelle, la première buse déposant un agent de coalescence sur une couche de matériau de construction,
- imprimer un second motif à l'aide d'une seconde buse disposée dans l'imprimante tridimensionnelle, la seconde buse déposant un agent modificateur de coalescence sur une couche de matériau de construction,
- ordonner à une unité de durcissement de l'imprimante tridimensionnelle de durcir la couche de matériau de construction,
- ordonner à un capteur de vérifier la présence d'une différence de hauteur entre le premier et le second motif et de détecter une anomalie si ladite différence n'est pas présente.

11. Imprimante tridimensionnelle comprenant
un processeur,
un dispositif de stockage,
le dispositif de stockage comprenant des instructions exécutables pour :
imprimer un premier motif d'agent de coalescence sur une couche de matériau de construction dans l'imprimante tridimensionnelle à l'aide d'une buse disposée dans l'imprimante tridimensionnelle,
imprimer un second motif adjacent au premier motif à l'aide d'au moins une seconde buse pour déposer un agent modificateur de coalescence,
durcir la couche de matériau de construction,
détecter une différence de hauteur à la jonction entre le premier motif et le second motif, et détecter une anomalie si ladite différence n'est pas présente.
